# EUROPÄISCHE PATENTSCHRIFT

(11) **EP 3 946 904 B1**
(45) Veröffentlichungstag und Bekanntmachung des Hinweises auf die Patenterteilung: **08.07.2026**
(21) Anmeldenummer: 19720755.8
(22) Anmeldetag: 25.03.2019
(51) Int. Cl.: B29C 65/34, F16L 47/03, B29K 101/12, B29L 23/00

(54) **SCHWEISSBARES VERBINDUNGSELEMENT ZUM VERBINDEN ODER ANSCHLIESSEN THERMOPLASTISCHER LEITUNGSELEMENTE, SOWIE EINE SCHWEISSANORDNUNG UND EIN VERFAHREN ZUM HERSTELLEN EINER SCHWEISSVERBINDUNG**
WELDABLE CONNECTING ELEMENT FOR CONNECTING OR JOINING THERMOPLASTIC PIPE ELEMENTS, AND A WELDING ARRANGEMENT AND A METHOD FOR PRODUCING A WELDED CONNECTION
ÉLÉMENT DE LIAISON SOUDABLE DESTINÉ À LIER OU À CONNECTER DES ÉLÉMENTS DE CONDUITE THERMOPLASTIQUES, ET SYSTÈME DE SOUDAGE ET PROCÉDÉ DE FABRICATION D'UNE LIAISON SOUDÉE

(43) Veröffentlichungstag der Anmeldung: 09.02.2022
(73) Patentinhaber: agru Kunststofftechnik Gesellschaft m.b.H., 4540 Bad Hall (AT)
(72) Erfinder: LUEGHAMER, Albert, 4522 Sierning (AT); SEVERA, Gerald, 4540 Bad Hall (AT)
(74) Vertreter: Burger, Hannes
(86) Internationale Anmeldenummer: PCT/AT2019/060101
(87) Internationale Veröffentlichungsnummer: WO 2019/136508

(56) Entgegenhaltungen:
- JP-A- 2005 069 445
- JP-A- H06 331 087

## Beschreibung

Die Erfindung betrifft ein schweißbares Verbindungselement zum Verbinden oder Anschlie-βen thermoplastischer Leitungselemente, sowie eine Schweißanordnung und ein Verfahren zum Herstellen einer Schweißverbindung.

Das Verbinden von Leitungselementen aus einem Thermoplast mit Hilfe einer ebenfalls thermoplastischen, mit einem Heizelement versehenen Verbindungselement ist allgemein bekannt. Unter Leitungselementen werden hierbei Rohrleitungsteile, Armaturen und Formstücke verstanden, die durch die Verbindungselemente zu Leitungen und Leitungsnetzen zusammengefügt werden. Die Verbindungselemente sind hierbei häufig als Elektroschweißmuffen und als elektrische schweißbare Anschluss- und Anbohrschellen ausgebildet. Die Verbindungselemente können jedoch auch für das Verbinden anderer Elemente als Rohrleitungselemente verwendet werden, z.B. zum Zusammenfügen von Stangenteilen, doch stellt die Verwendung von schweißbaren Verbindungselementen im Rohrleitungsbau eines der häufigsten Anwendungsgebiete dar. Damit die Verbindung von Leitungselementen mittels solchen Verbindungselementen zuverlässig erfolgt, ist eine Kontrolle der Verschweißung erwünscht. Die EP 0 173 174 A1 geht davon aus, dass die Qualität der Verschweißung im Wesentlichen von der richtigen Temperatur im Schweißbereich und dem beim Schweißvorgang entstehenden Schweißdruck abhängig ist, d.h. von dem Druck, der auf das durch die zugeführte Wärme plastifizierte Material in der Schweißzone ausgeübt wird. Dieser entsteht dadurch, dass dem Verbindungselement eine Schrumpfreserve erteilt wird, die sich beim Plastifizieren des Schweißbereiches durch die zugeführte Wärme in einem Schrumpfen des Verbindungselementes äußert. Dieses Schrumpfen, verbunden mit der Volumenvergrößerung des Materials beim Erwärmen des Schweißbereiches, bewirkt diese Drucksteigerung in dem Schweißbereich.

Weitere Einsteckkontrollen sind aus der JP H06 331087 A und der JP 2005 069445 A bekannt.

Da alle Umstände, die das Erreichen der richtigen Schweißtemperatur und des Schweißdruckes verhindern, eine Qualitätsverminderung der Schweißverbindung darstellen, werden schon seit längerer Zeit die Verbindungselemente mit zusätzlichen Anzeigemitteln versehen, welche Rückschlüsse auf die Qualität der Schweißung geben sollen.

Bei einer bekannten Anzeigevorrichtung wird ein Farbumschlagpunkt verwendet, der auf der äußeren Muffenoberfläche angebracht wird und bei genügender Erwärmung des Körpers des Verbindungselementes seine Farbe wechselt. Damit eine verbesserte Temperaturanzeige erreicht wird, ist es aus der CH-PS 553 368 bekannt, den Farbumschlagpunkt an eine Stelle geringerer Wandstärke anzuordnen. Aber auch in diesem Fall kann nur die Temperatur festgestellt werden, nicht aber der Schweißdruck, und zudem besteht die Unsicherheit, dass durch äußere Wärmebeeinflussung ein Farbumschlag erfolgen kann.

Da die Temperaturanzeige am Verbindungselement allein keine zuverlässigen Rückschlüsse auf die Qualität der Schweißung erlaubt, sind auch Lösungen bekanntgeworden, bei denen der in dem Schweißbereich der Schweißung entstehende Druck sichtbar gemacht wird. Hierbei können Schwachstellen im Körper des Verbindungselementes vorgesehen werden, die sich durch den entstehenden Schweißdruck ausbeulen. Weiter ist aus der CH-PS 632 078 bekannt, Ausnehmungen vorzusehen, deren Grund in der Nähe des Schweißbereiches endet. Diese füllen sich beim Schweißen mit mehr oder weniger plastischem Material und zeigen somit an, ob ein ausreichender Schweißdruck mit entsprechender Temperatur im Schweißbereich vorhanden ist. Eine aus der CH-PS 601 719 bekannte Verbesserung dieser Qualitätsanzeige für die Schweißung besteht darin, dass in der Bohrung ein Stift angeordnet ist. Dieser erhebt sich beim Auftreten des Schweißdruckes über die Muffenoberfläche und ist dadurch gut erkennbar. Diese Ausführungsform hat sich vor allem bei relativ dünnwandigen Verbindungselementen bewährt. Der hervortretende Stift stellt ein verhältnismäßig genaues Maß für die Temperatur und den Schweißdruck in dem Schweißbereich dar. Bei höheren Schweißdrücken aber, wie sie bei dickwandigeren Verbindungselementen üblich sind, weist diese Ausführungsform den Nachteil auf, dass die Tiefe der Bohrung schwierig festzulegen ist. Ist der Grund der Bohrung zu nahe beim Schweißbereich, erfolgt die Bewegung des Stiftes zu früh, ist jedoch der Grund der Bohrung vom Schweißbereich entfernt angeordnet, tritt keine Bewegung des Stiftes auf, obwohl der Schweißdruck entstanden ist.

Auch die EP 1 745 917 A1 und die DE 10 225 370A1 offenbaren jeweils Elektroschweißmuffen für Rohrleitungsverbindungen aus thermoplastischen Kunststoffen, wobei die Elektroschweißmuffe mit einer Rohrleitung mittels eines Elektroschweißverfahrens verbindbar ist.

Zum Herstellen der Verbindung wird eine in der Elektroschweißmuffe eingebettete Heizdrahtwicklung mit einer externen elektrischen Stromquelle verbunden, wodurch die Elektroschweißmuffe bereichsweise aufgeschmolzen wird.

Die aus dem Stand der Technik bekannten Elektroschweißmuffen weisen den Nachteil auf, dass bei unzureichend in die Elektroschweißmuffe eingesteckten Rohren keine ausreichende Verbindung zwischen dem Rohr und der Elektroschweißmuffe hergestellt werden kann. Dies führt zu undichten Rohrverbindungen. Außerdem kann ein unzureichend in die Elektroschweißmuffe eingestecktes Rohr dazu führen, dass die Elektroschweißmuffe lokal überhitzt, was im Schlimmsten Fall sogar zu einem Brand führen kann. In den aus dem Stand der Technik bekannten Elektroschweißmuffen ist eine Anzeige zur Kontrolle der richtigen Positionierung der einzelnen Elemente zueinander nur ungenügend gelöst.

Aufgabe der vorliegenden Erfindung war es, die Nachteile des Standes der Technik zu überwinden und ein verbessertes Verbindungselement, sowie ein verbessertes Verfahren zum Verschweißen von Verbindungselementen anzugeben.

Diese Aufgabe wird durch eine Vorrichtung und ein Verfahren gemäß den Ansprüchen gelöst.

Erfindungsgemäß ist ein schweißbares Verbindungselement zum Verbinden oder Anschließen thermoplastischer Leitungselemente ausgebildet. Das Verbindungselement umfasst:
- einen thermoplastischen Körper;
- zumindest ein Heizelement, welches im Körper eingebettet ist, wobei das Heizelement in einem Schweißbereich zur Erzeugung von Wärme zur Verschweißung des Körpers mit dem zumindest einen Leitungselement dient. Weiters ist eine Fügekontrolle vorgesehen, welche dazu ausgebildet ist, den Start des Schweißvorganges zu unterbinden und/oder den Schweißvorgang zu unterbrechen, wenn der Körper nicht korrekt mit dem Leitungselement gefügt ist.

Das erfindungsgemäße Verbindungselement weist den Vorteil auf, dass ein korrektes Fügen des Verbindungselementes und der Leitungselemente nicht erst im fertig verschweißten Zustand überprüft wird, sondern vor dem Start des Schweißvorgangs bzw. während dem Schweißvorgang überprüft werden kann. Dies bringt insbesondere den Vorteil mit sich, dass weniger Ausschuss produziert wird, da der die Schweißung erst gar nicht gestartet wird, wenn das Verbindungselement und das Anschlusselement nicht korrekt miteinander gefügt sind. Darüber hinaus können Sicherheitsrisiken, wie etwa Brandgefahr, bei Start des Schweißvorgangs bei nicht korrekt gefügten Bauteilen durch die erfindungsgemäßen Merkmale überraschenderweise unterbunden werden.

Weiters ist vorgesehen, dass das Heizelement in Form eines Widerstandsheizdrahtes ausgebildet ist, wobei die Fügekontrolle eine Unterbrechung im Widerstandsheizdraht und ein Überbrückungselement zum Schließen der Unterbrechung umfasst, wobei das Überbrückungselement derart im Körper angeordnet ist, dass die Unterbrechung geschlossen ist, wenn das Leitungselement korrekt mit dem Verbindungselement gefügt ist. Eine derartige Unterbrechung im Widerstandsheizdraht bringt den Vorteil mit sich, dass die verwendete Schweißmaschine keine zusätzliche Sensorik aufweisen muss, um den korrekten Zusammenbau des Verbindungselementes mit dem Leitungselement zu detektieren. Somit können gängige Schweißmaschinen verwendet werden, wodurch die Verbindungselemente mit erhöhter Sicherheit auf breiter Basis Anwendung finden können. Darüber hinaus ist eine derartige Unterbrechung im Widerstandsheizdraht einfach und kostengünstig herzustellen.

Ferner ist vorgesehen, dass im Körper ein Anschlag ausgebildet ist, welcher als Einsteckbegrenzung für das Leitungselement dient, wobei das Überbrückungselement in Form eines elektrisch leitfähigen Federelementes ausgebildet ist, welches im Anschlag angeordnet ist. Besonders ein derartig ausgebildetes Überbrückungselement weist einen einfachen und somit wenig fehleranfälligen Aufbau auf. Darüber hinaus bringt ein derartig ausgebildetes Überbrückungselement den überraschenden Vorteil mit sich, dass die Funktion des Überbrückungselementes nicht übergangen werden kann bzw. dass während der einzelnen Schritte zum Fügevorgang bzw. Verschweißvorgang keine gesonderten Vorkehrungen getroffen werden müssen, um das korrekte Fügen des Verbindungselementes und des Leitungselementes zu erfassen.

Darüber hinaus ist vorgesehen, dass das Überbrückungselement in Form eines elektrisch leitfähigen Federelementes ausgebildet ist, welches an einem Innenumfang des Schweißbereiches angeordnet ist und in Radialrichtung wirkt. Besonders ein derartig ausgebildetes Überbrückungselement weist einen einfachen und somit wenig fehleranfälligen Aufbau auf. Darüber hinaus bringt ein derartig Ausgebildetes Überbrückungselement den überraschenden Vorteil mit sich, dass die Funktion des Überbrückungselementes nicht übergangen werden kann bzw. dass während der einzelnen Schritte zum Fügevorgang bzw. Verschweißvorgang keine gesonderten Vorkehrungen getroffen werden müssen, um das korrekte Fügen des Verbindungselementes und des Leitungselementes zu erfassen.

Ferner ist vorgesehen, dass das Überbrückungselement durch einen leitfähigen Materialstreifen gebildet ist, welcher auf dem Leitungselement applizierbar ist, insbesondere dass im Körper ein Anschlag ausgebildet ist, welcher als Einsteckbegrenzung für das Leitungselement dient und einen ersten Kontakt und in Umfangsrichtung versetzt einen zweiten Kontakt aufweist und der Materialstreifen stirnseitig am Leitungselement applizierbar ist und zum elektrischen Verbinden des ersten Kontaktes mit dem zweiten Kontakt dient. Ein derartiges Überbrückungselement kann einfach aufgebaut sein und ist im Fügevorgang bzw. im Herstellvorgang der Schweißverbindung einfach zu applizieren.

Gemäß einer Weiterbildung ist es möglich, dass am Körper zumindest ein Formelement, insbesondere eine Ausnehmung, ausgebildet ist, welche zur Aufnahme eines Sensors der Fügekontrolle dient. Dies bringt den Vorteil mit sich, dass bei Verwendung eines Sensors als Fügekontrolle die Position des Sensors exakt festgelegt ist und somit etwaige Bedienungsfehler möglichst hintangehalten werden können.

Ferner kann es zweckmäßig sein, wenn am Körper axial zueinander beabstandet zumindest zwei Formelemente, insbesondere Ausnehmungen, ausgebildet sind, welche jeweils zur Aufnahme eines Sensors der Fügekontrolle dienen. Dies bringt den Vorteil mit sich, dass für ein Verbindungselement, welches zwei Leitungselemente miteinander verbindet, für jedes der Leitungselemente ein Sensor ausgebildet sein kann, welcher zur Erfassung der korrekten Lage bzw. der korrekten Fügung des Verbindungselementes mit den Leitungselementen dienen kann.

Erfindungsgemäß ist eine Schweißanordnung ausgebildet. Die Schweißanordnung umfasst:
- zumindest ein thermoplastisches Leitungselement;
- ein Verbindungselement, welches einen thermoplastischen Körper aufweist, wobei ein Heizelement im Körper eingebettet ist, welches in einem Schweißbereich zur Erzeugung von Wärme zur Verschweißung des Körpers mit dem zumindest einen Leitungselement dient;
- ein Schweißgerät zum Verschweißen des Verbindungselementes mit dem zumindest einen thermoplastischen Leitungselement.

Weiters ist eine Fügekontrolle vorgesehen ist, welche dazu ausgebildet ist, den Start des Schweißvorganges zu unterbinden und/oder den Schweißvorgang zu unterbrechen, wenn der Körper nicht korrekt mit dem Leitungselement gefügt ist.

Die erfindungsgemäße Schweißanordnung bietet den Vorteil, dass ein korrektes Fügen des Verbindungselementes und der Leitungselemente nicht erst im fertig verschweißten Zustand überprüft wird, sondern vor dem Start des Schweißvorgangs bzw. während dem Schweißvorgang überprüft werden kann. Dies bringt insbesondere den Vorteil mit sich, dass weniger Ausschuss produziert wird, da der die Schweißung erst gar nicht gestartet wird, wenn das Verbindungselement und das Anschlusselement nicht korrekt miteinander gefügt sind. Darüber hinaus können Sicherheitsrisiken, wie etwa Brandgefahr, bei Start des Schweißvorgangs bei nicht korrekt gefügten Bauteilen durch die erfindungsgemäßen Merkmale überraschenderweise unterbunden werden.

Weiters ist vorgesehen, dass die Fügekontrolle einen Sensor umfasst, welcher mit dem Schweißgerät gekoppelt ist, wobei vor dem Start des Schweißvorganges und/oder während dem Schweißvorgang vom Schweißgerät mittels des Sensors die korrekte Verbindung des Verbindungselementes mit dem Leitungselement abgefragt wird. Dies bringt insbesondere den Vorteil mit sich, dass der Schweißvorgang in Abhängigkeit des Sensorsignals durchgeführt werden kann. Somit kann der Schweißvorgang sofort unterbrochen werden, wenn die korrekte Positionierung der Leitungselemente und des Verbindungselementes nicht mehr gegeben ist.

Weiters kann vorgesehen sein, dass der Sensor am Körper des Verbindungselementes angeordnet ist oder anordenbar ist, und dass die Fügekontrolle ein Sensorgegenelement umfasst, welches am Leitungselement angeordnet ist oder anordenbar ist, wobei der Sensor mit dem Schweißgerät koppelbar ist und das Schweißgerät dazu ausgebildet ist, den Schweißvorgang in Abhängigkeit einer korrekten Position des Sensorgegenelementes relativ zum Sensor zu starten bzw. durchzuführen. Dies bringt den Vorteil mit sich, dass das Verbindungselement keine zusätzlichen Bauteile aufweisen muss, um die Fügekontrolle zu realisieren.

Gemäß einer besonderen Ausprägung ist es möglich, dass eine Fügevorrichtung ausgebildet ist, welche zum Positionieren des zumindest einen Leitungselementes relativ zum Verbindungselement dient und dass die Fügekontrolle einen Sensor umfasst, welcher an der Fügevorrichtung angeordnet ist oder anordenbar ist, und dass die Fügekontrolle ein Sensorgegenelement umfasst, welches am Leitungselement angeordnet ist oder anordenbar ist, wobei der Sensor mit dem Schweißgerät koppelbar ist und das Schweißgerät dazu ausgebildet ist, den Schweißvorgang in Abhängigkeit einer korrekten Positionierung des Sensorgegenelementes relativ zum Sensor zu starten bzw. durchzuführen. Da beim Schweißen von sehr vielen Typen von Verbindungselementen ohnehin eine Fügevorrichtung notwendig ist, hat es sich als überraschend einfach erwiesen, wenn diese Fügevorrichtung gleichzeitig zur Aufnahme bzw. Applikation eines Sensors dient.

Entsprechend einer vorteilhaften Weiterbildung kann vorgesehen sein, dass der Sensor in Form eines RFID-Moduls ausgebildet ist und dass das Sensorgegenelement in Form eines RFID-Tags ausgebildet ist. Insbesondere eine derartige RFID-Lösung kann einen einfachen und zuverlässigen Aufbau aufweisen.

Insbesondere kann es vorteilhaft sein, wenn der Sensor in Form eines Hallsensors ausgebildet ist und dass das Sensorgegenelement in Form eines Magnetelements ausgebildet ist. Insbesondere eine derartige Hallsensor-Lösung kann einen einfachen und zuverlässigen Aufbau aufweisen. Darüber hinaus kann mittels dem Hallsensor ein Abstand des Sensorgegenelementes zum Sensor einfach detektiert werden.

Weiters ist es auch denkbar, dass der Sensor in Form eines induktiven Sensors, oder eines sonstigen Sensors ausgebildet ist.

Ferner kann vorgesehen sein, dass der Sensor in Form eines optischen Sensors ausgebildet ist und dass das Sensorgegenelement in Form eines Reflektors ausgebildet ist. Insbesondere eine derartige Hallsensor-Lösung kann einen einfachen und zuverlässigen Aufbau aufweisen.

Darüber hinaus kann vorgesehen sein, dass die Fügekontrolle einen Ultraschallsensor umfasst, insbesondere dass der Ultraschallsensor **mit** dem Schweißgerät gekoppelt ist. Die Verwendung eines Ultraschallsensors bietet den überraschenden Vorteil, dass am Leitungselement kein Sensorgegenelement angeordnet werden muss, wodurch diese Fehlerquelle im Fügevorgang eliminiert werden kann. Darüber hinaus ist eine Fügekontrolle mittels eines Ultraschallsensors einfach umzusetzen. Darüber hinaus kann eine Fügekontrolle mittels eines Ultraschallsensors eine hohe Zuverlässigkeit aufweisen.

Insbesondere kann vorgesehen sein, dass der Ultraschallsensor zur Erfassung der Wandstärke des Verbindungselementes dient, wobei bei Vorhandensein eines Leitungselementes eine größere Wandstärke detektiert wird und somit bei korrekter Positionierung des Ultraschallsensors auf eine korrekte Fügung des Leitungselementes mit dem Verbindungselement geschlossen werden kann.

Vorteilhaft ist auch eine Ausprägung, gemäß welcher vorgesehen sein kann, dass am Körper zumindest ein Formelement, insbesondere eine Ausnehmung, ausgebildet ist, welche zur Aufnahme des Sensors dient. Dies bringt den Vorteil mit sich, dass bei Verwendung eines Sensors als Fügekontrolle die Position des Sensors exakt festgelegt ist und somit etwaige Bedienungsfehler möglichst hintangehalten werden können.

Gemäß einer Weiterbildung ist es möglich, dass am Körper axial zueinander beabstandet zumindest zwei Formelemente, insbesondere Ausnehmungen, ausgebildet sind, welche jeweils zur Aufnahme des Sensors dienen. Dies bringt den Vorteil mit sich, dass für ein Verbindungselement, welches zwei Leitungselemente miteinander verbindet, für jedes der Leitungselemente ein Sensor ausgebildet sein kann, welcher zur Erfassung der korrekten Lage bzw. der korrekten Fügung des Verbindungselementes mit den Leitungselementen dienen kann.

Erfindungsgemäß ist ein Verfahren zum Verbinden oder Anschließen thermoplastischer Leitungselemente mit einem Verbindungselement vorgesehen. Das Verfahren umfasst die Verfahrensschritte:
- bereitstellen des zumindest einen thermoplastischen Leitungselementes;
- bereitstellen des Verbindungselementes, welches einen thermoplastischen Körper aufweist, wobei ein Heizelement im Körper eingebettet ist, welches in einem Schweißbereich zur Erzeugung von Wärme zur Verschweißung des Körpers mit dem zumindest einen Leitungselement dient;
- fügen des Verbindungselementes mit dem zumindest einen thermoplastischen Leitungselement;
- bereitstellen eines Schweißgerätes zum Verschweißen des Verbindungselementes mit dem zumindest einen thermoplastischen Leitungselement;
- verschweißen des Verbindungselementes mit dem zumindest einen thermoplastischen Leitungselement durch Erzeugung von Wärme im Schweißbereich mittels des Schweißgerätes. Der Schweißvorgang wird nur dann gestartet oder fortgesetzt, wenn mittels einer Fügekontrolle eine korrekte Verbindung zwischen dem Körper und dem zumindest einen thermoplastischen Leitungselement festgestellt wird.

Das erfindungsgemäße Verfahren bietet den Vorteil, dass ein korrektes Fügen des Verbindungselementes und der Leitungselemente nicht erst im fertig verschweißten Zustand überprüft wird, sondern vor dem Start des Schweißvorgangs bzw. während dem Schweißvorgang überprüft werden kann. Dies bringt insbesondere den Vorteil mit sich, dass weniger Ausschuss produziert wird, da der die Schweißung erst gar nicht gestartet wird, wenn das Verbindungselement und das Anschlusselement nicht korrekt miteinander gefügt sind. Darüber hinaus können Sicherheitsrisiken, wie etwa Brandgefahr, bei Start des Schweißvorgangs bei nicht korrekt gefügten Bauteilen durch die erfindungsgemäßen Merkmale überraschenderweise unterbunden werden.

Darüber hinaus kann vorgesehen sein, dass die Fügekontrolle eine Verbindung in einer Unterbrechung eines Widerstandsheizdrahtes herstellt, wenn das Leitungselement korrekt mit dem Verbindungselement gefügt ist. Eine derartige Verbindung einer Unterbrechung lässt sich einfach detektieren.

Weiters kann vorgesehen sein, dass das Schweißgerät eine Unterbrechung des Widerstandsheizdrahtes detektiert und eine Fehlermeldung ausgibt.

Die genannten Merkmale und unabhängigen Lösungsansätze lösen die gemeinsame Aufgabe der Erfindung.

Ein Ultraschallsensor kann sowohl einen Sender, als auch einen Empfänger aufweisen, welche in der baulichen Einheit Ultraschallsensor vereint sind. Ein derartiger Ultraschallsensor findet vor allem dann Anwendung, wenn der im Ultraschallsensor verbaute Sender normal auf die Oberfläche des zu messenden Objektes stehen kann und die Ultraschallwellen somit wieder an dieselbe Position zurückreflektiert werden.

Insbesondere kann vorgesehen sein, dass ein Ultraschallgerät einen ersten Ultraschallsensor aufweist, der in einem Übertragungsmodus eine Ultraschallwelle zu einem Objekt überträgt und in einem Empfangsmodus ein Echo der von dem Objekt reflektierten Ultraschallwelle empfängt. Weiters weist der Sensorkopf mindestens einen zweiten Ultraschallsensor auf, der in der Nähe des ersten Ultraschallsensors angeordnet ist und ein Echo der von dem Objekt reflektierten Ultraschallwelle empfängt. Ein Ultraschallgerät kann außerdem eine Steuereinheit aufweisen, die ein Abstandssignal mit Bezug auf das Objekt berechnet unter Verwendung eines ersten Abstandssignals, das auf der Grundlage des von dem ersten Ultraschallsensor empfangenen Echos ausgegeben wird, und eines zweiten Abstandssignals, das von dem zweiten Ultraschallsensor ausgegeben wird, wenn sich der erste Ultraschallsensor im Empfangsmodus befindet.

Weiters kann vorgesehen sein, dass das Formelement zur Aufnahme eines Senders und/oder eines Empfängers und/oder eines Sensorkopfes eines Ultraschallgerätes dient.

Zum besseren Verständnis der Erfindung wird diese anhand der nachfolgenden Figuren näher erläutert.

Es zeigen jeweils in stark vereinfachter, schematischer Darstellung:
- Fig. 1: eine Schnittdarstellung eines Ausführungsbeispiels eines Verbindungselementes mit einem Sensor und einem Sensorgegenelement;
- Fig. 2: eine Schnittdarstellung eines weiteren Ausführungsbeispiels eines Verbindungselementes mit einem Sensor und einem Sensorgegenelement, wobei eine Fügevorrichtung vorgesehen ist;
- Fig. 3: eine Schnittdarstellung eines weiteren Ausführungsbeispiels eines Verbindungselementes mit einem Ultraschallsensor;
- Fig. 4: eine Schnittdarstellung eines weiteren Ausführungsbeispiels eines Verbindungselementes mit einem im Verbindungselement verbauten Sensor;
- Fig. 5: eine perspektivische Detailansicht eines weiteren Ausführungsbeispiels eines Verbindungselementes mit einem Überbrückungselement in Form eines in einem Steg angeordneten Federelementes;
- Fig. 6: eine perspektivische Detailansicht eines weiteren Ausführungsbeispiels eines Verbindungselementes mit einem Überbrückungselement in Form eines Materialstreifens;
- Fig. 7: eine perspektivische Detailansicht eines weiteren Ausführungsbeispiels eines Verbindungselementes mit einem Überbrückungselement in Form eines in einer Innenmantelfläche angeordneten Federelementes;
- Fig. 8: eine Schnittdarstellung eines weiteren Ausführungsbeispiels eines Verbindungselementes mit einem Ultraschallsensor, welcher einen diagonal gegenüberliegend angeordneten Sender und Empfänger aufweist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

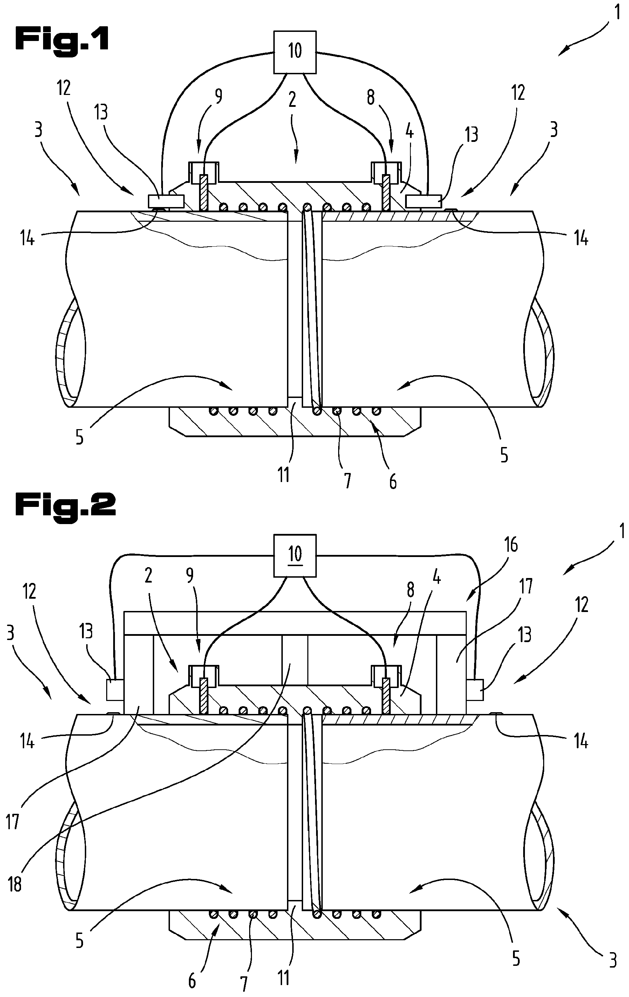

Fig. 1 zeigt ein erstes Ausführungsbeispiel einer Schweißanordnung 1 mit einem Verbindungselement 2 zum Verbinden von Leitungselementen 3.

Im Ausführungsbeispiel nach Fig. 1 ist das Verbindungselement 2 in Form einer Elektroschweißmuffe ausgebildet und die Leitungselemente 3 sind in Form von Rohrleitungen ausgebildet.

Wie aus Fig. 1 ersichtlich, kann vorgesehen sein, dass das Verbindungselement 2 einen thermoplastischen Körper 4 aufweist, in welchem in einem Schweißbereich 5 ein Heizelement 6 angeordnet ist. Das Heizelement 6 kann insbesondere in Form eines Widerstandsheizdrahtes 7 ausgebildet sein.

Beispielsweise ist es denkbar, dass das Verbindungselement 2 zum Verbinden von zwei Leitungselementen 3 dient und somit im Körper 4 des Verbindungselementes 2 zwei Schweißbereiche 5 ausgebildet sind.

Einer der Schweißbereiche 5 dient hierbei zum Verschweißen des Verbindungselementes 2 mit dem ersten Leitungselement und ein zweiter der Schweißbereiche 5 dient hierbei zum Verschweißen des Verbindungselementes 2 mit dem zweiten Leitungselement 3.

Wie aus Fig. 1 weiters ersichtlich, kann vorgesehen sein, dass das Heizelement 6 einen ersten Anschlusspunkt 8 und einen zweiten Anschlusspunkt 9 aufweist, welcher jeweils zum Verbinden mit einem Schweißgerät 10 dienen. Die beiden Anschlusspunkte 8, 9 können, wie in Fig. 1 dargestellt, im Bereich der beiden Längsenden des Verbindungselementes 2 ausgebildet sein, wobei mittels des Schweißgerätes 10 beide Schweißbereiche 5 gleichzeitig erhitzt werden können.

Weiters ist es auch denkbar, dass je Schweißbereich 5 ein erster Anschlusspunkt 8 und ein zweiter Anschlusspunkt 9 für das Schweißgerät 10 ausgebildet sind. Dadurch wird ermöglicht, dass jeder der beiden Schweißbereiche 5 einzeln und unabhängig voneinander erhitzt werden kann und zwischen dem Verbindungselement 2 und dem ersten Leitungselement 3 sowie und zwischen dem Verbindungselement 2 und dem zweiten Leitungselement 3 gesondert eine Schweißverbindung hergestellt werden kann.

Wie aus Fig. 1 weiters ersichtlich, kann vorgesehen sein, dass am Körper 4 des Verbindungselementes 2 ein Anschlag 11 ausgebildet ist, welcher zur korrekten Positionierung der beiden Leitungselemente 3 im Verbindungselement 2 dient. Der Anschlag 11 kann zentral im Verbindungselement 2 ausgebildet sein.

Weiters ist eine Fügekontrolle 12 ausgebildet, welche dazu ausgebildet ist, den Start des Schweißvorganges zu unterbinden und/oder den Schweißvorgang zu unterbrechen, wenn der Körper 4 nicht korrekt mit dem Leitungselement 3 gefügt ist.

Wie aus dem Ausführungsbeispiel nach Fig. 1 ersichtlich, kann vorgesehen sein, dass die Fügekontrolle 12 einen Sensor 13 und ein Sensorgegenelement 14 umfasst. Insbesondere kann vorgesehen sein, dass für jedes der Leitungselemente 3 ein eigener Sensor 13 bzw. ein eigenes Sensorgegenelement 14 ausgebildet ist.

Weiters kann vorgesehen sein, dass am Körper 4 des Verbindungselementes 2 ein Formelement 15 zur Aufnahme des Sensors 13 ausgebildet ist. Insbesondere kann vorgesehen sein, dass das Formelement 15 zur formschlüssigen Aufnahme des Sensors 13 dient, wodurch die Position des Sensors 13 exakt festgelegt werden kann. Insbesondere kann vorgesehen sein, dass das Formelement 15 in Form einer Ausnehmung ausgebildet ist. Das Sensorgegenelement 14 kann am Leitungselement 3 appliziert sein bzw. appliziert werden.

Weiters kann vorgesehen sein, dass der oder die Sensoren 13 mit dem Schweißgerät 10 verbunden sind, wodurch eine Schweißung in Abhängigkeit der Fügekontrolle 12 ermöglicht wird. Der Sensor 13 kann derart ausgebildet sein, dass er eine gewisse Position des Sensorgegenelementes 14 erfassen kann.

Wenn der Sensor 13 in Form eines RFID-Moduls ausgebildet ist, ist es beispielsweise denkbar, dass über die Funktionalität des RFID-Moduls der Abstand zum Sensorgegenelement 14 in Form eines RFID-Tags ermittelt werden kann. Somit lässt sich die Relativposition des RFID-Moduls und des RFID-Tags zueinander bestimmen.

Wenn der Sensor 13 in Form eines Hallsensors ausgebildet ist, ist es beispielsweise denkbar, dass über die Funktionalität des Hallsensors der Abstand zum Sensorgegenelement 14 in Form eines Magnetelementes ermittelt werden kann. Somit lässt sich die Relativposition des Hallsensors und des Magnetelementes zueinander bestimmen.

Bei Ausbildung des Sensors 13 in Form eines optischen Sensors kann beispielsweise vorgesehen sein, dass diese erfasst, wenn das Sensorgegenelement 14, welches in Form eines Reflektors ausgebildet ist, sich an einer bestimmten Position befindet.

Der Schweißvorgang zum Fügen des Verbindungselementes 2 mit den Leitungselementen 3 kann folgende Verfahrensschritte umfassen, wobei diese auch in unterschiedlicher Reihenfolge durchgeführt werden können.

In einem ersten Verfahrensschritt kann vorgesehen sein, dass das Verbindungselement 2 und die Leitungselemente 3 bereitgestellt werden, wobei die Leitungselemente 3 entsprechend den bekannten Schweißverfahren zur Verschweißung mit dem Verbindungselement 2 vorbereitet werden können.

In einem weiteren Verfahrensschritt wird das Schweißgerät 10 bereitgestellt, wobei elektrische Anschlüsse des Schweißgerätes 10 mit dem ersten Anschlusspunkt 8 und dem zweiten Anschlusspunkt 9 verbunden werden. Weiters können die Sensoren 13 an den dafür vorgesehenen Formelementen 15 am Verbindungselement 2 angeordnet werden und ebenfalls mit dem Schweißgerät 10 gekoppelt werden.

Weiters können entsprechend der notwendigen Einstecktiefe die Sensorgegenelemente 14 an den Leitungselementen 3 angeordnet werden.

Anschließend können die Leitungselemente 3 mit dem Verbindungselement 2 gefügt werden. Hierbei können die Leitungselemente 3 soweit in das Verbindungselement 2 eingeschoben werden, bis die Leitungselemente 3 am Anschlag 11 anliegen.

Mittels der Sensoren 13 kann erfasst werden, ob die Leitungselemente 3 korrekt mit dem Verbindungselement 2 gefügt sind, wobei auf Basis dieser Information der Schweißvorgang gestartet bzw. durchgeführt werden kann.

Insbesondere kann vorgesehen sein, dass der Schweißvorgang nur dann gestartet wird, wenn mittels der Sensoren 13 die korrekte Lage der Leitungselemente 3 detektiert wird.

Weiters ist es auch denkbar, dass während dem Schweißvorgang mittels der Sensoren 13 die korrekte Lage der Leitungselemente 3 detektiert wird und der Schweißvorgang abgebrochen wird, wenn sich während dem Schweißen die Leitungselemente 3 aus ihrer korrekten Lage relativ zum Verbindungselement 2 entfernen. Alternativ dazu ist es natürlich auch denkbar, dass der Schweißvorgang nicht abgebrochen wird, sondern durch das Schweißgerät 10 ein Alarmsignal ausgegeben wird, sodass einer Bedienperson die Möglichkeit eröffnet wird, die Lage der Leitungselemente 3 relativ zum Verbindungselement 2 zu korrigieren. Diese Möglichkeit zur Korrektur kann für einen gewissen Zeitbereich andauern. Wenn innerhalb dieser Zeit nicht die Leitungselemente 3 relativ zum Verbindungselement 2 in ihre korrekte Position verbracht werden, kann der Schweißvorgang abgebrochen werden.

In der Fig. 2 ist eine weitere und gegebenenfalls für sich eigenständige Ausführungsform der Schweißanordnung 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Wie aus Fig. 2 ersichtlich, kann vorgesehen sein, dass eine Fügevorrichtung 16 ausgebildet ist, welche zur Aufnahme der Leitungselemente 3 und/oder des Verbindungselementes 2 dient. Die Fügevorrichtung 16 kann Klemmelemente 17 aufweisen, welche zum Halten bzw. Positionieren der Leitungselemente 3 dienen. Weiters kann die Fügevorrichtung 16 Klemmelemente 18 aufweisen, welche zum Halten bzw. zur Positionierung des Verbindungselementes 2 dienen.

Wie aus Fig. 2 ersichtlich, kann vorgesehen sein, dass die Sensoren 13 der Fügekontrolle 12 jeweils an den Klemmelementen 17 für die Leitungselemente 3 angeordnet sind, wobei die Funktion der Fügekontrolle 12 mutatis mutandis zum Ausführungsbeispiel aus Fig. 1 erfolgen kann.

Das in Fig. 2 beschriebene Ausführungsbeispiel bringt den Vorteil mit sich, dass die Sensoren 13 fix an der Fügevorrichtung 16 verbleiben können.

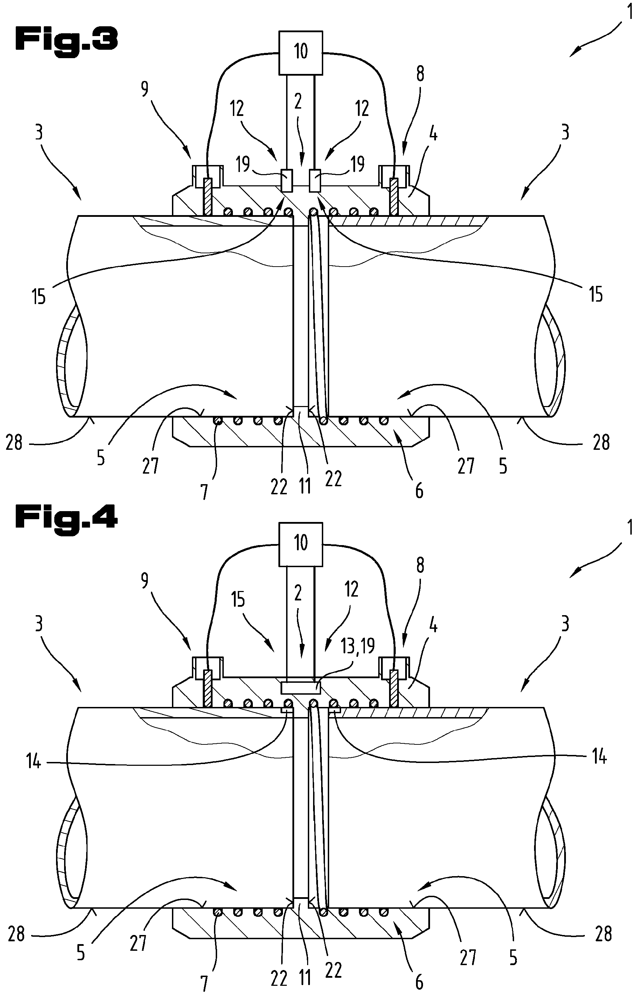

In der Fig. 3 ist eine weitere und gegebenenfalls für sich eigenständige Ausführungsform der Schweißanordnung 1 gezeigt, wobei wiederum für gleiche Teile gleiche Bezugszeichen bzw. Bauteilbezeichnungen wie in den vorangegangenen Figuren 1 bis 2 verwendet werden. Um unnötige Wiederholungen zu vermeiden, wird auf die detaillierte Beschreibung in den vorangegangenen Figuren 1 bis 2 hingewiesen bzw. Bezug genommen.

Wie aus Fig. 3 ersichtlich, kann vorgesehen sein, dass die Fügekontrolle 12 einen oder mehrere Ultraschallsensoren 19 umfasst, welche an entsprechenden Formelementen 15 am Verbindungselement 2 angeordnet sein können oder angeordnet werden können. Die Verwendung von Ultraschallsensoren 19 bringt den Vorteil mit sich, dass diese kein Sensorgegenelement 14 benötigen, sondern dass bei richtiger Positionierung der Ultraschallsensoren 19 eine korrekte Verbindung zwischen dem Verbindungselement 2 und den Leitungselementen 3 direkt erfasst werden kann. Somit ist es bei Verwendung derartiger Ultraschallsensoren 19 nicht zwingend notwendig, dass die Leitungselemente 3 mit einem Sensorgegenelement 14 versehen werden.

Die Ultraschallsensoren 19 können im Bereich des Anschlages 11 angeordnet sein und zur Erfassung der Wandstärke des Verbindungselementes 2 dienen. Solange die Leitungselemente 3 nicht korrekt in das Verbindungselement 2 eingesteckt sind, wird ausschließlich die Wandstärke des Verbindungselementes 2 erfasst. Wenn jedoch die Leitungselemente 3 korrekt in das Verbindungselement 2 eingesteckt werden, so wird aufgrund der Wandstärke der Leitungselemente 3 vom Ultraschallsensor 19 eine unterschiedliche Wandstärke erfasst, wodurch eine korrekte Positionierung der Leitungselemente 3 relativ zum Verbindungselement 2 ermittelt werden kann.

Anstatt der Verwendung von zwei Ultraschallsensoren 19 ist es natürlich auch denkbar, dass nur ein Ultraschallsensor 19 ausgebildet ist, welcher die korrekte Positionierung der beiden Leitungselemente 3 relativ zum Verbindungselement 2 aufgrund eines größeren Erfassungsbereiches erfassen kann.

Die einzelnen Ultraschallsensoren 19 können ebenfalls mit dem Schweißgerät 10 gekoppelt sein, um eine Schweißung in Abhängigkeit der Erfassung der Ultraschallsensoren 19 durchführen zu können.

Weiters ist es auch denkbar, dass die Ultraschallsensoren 19 nicht nur zur Kontrolle der korrekten Positionierung des Verbindungselementes 2 relativ zu den Leitungselementen 3 dient, sondern dass aufgrund der Materialeigenschaftsänderungen im Verbindungselement 2 bzw. im Leitungselement 3 auch ein korrekte Fortschritt der Schweißung diktiert werden kann. Auch hier könne nach Beendigung des Schweißprozesses die Ultraschallsensoren 19 vom Verbindungselement 2 entfernt werden.

In der Fig. 4 ist eine weitere und gegebenenfalls für sich eigenständige Ausführungsform der Schweißanordnung 1 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass der Sensor 13, 19 im Verbindungselement 2 eingebettet ist und fix in diesem verbleibt. Natürlich können auch im Ausführungsbeispiel nach Fig. 4 optional ein Sensor 13, 19 oder für jedes der Leitungselemente 3 ein eigener Sensor vorgesehen sein.

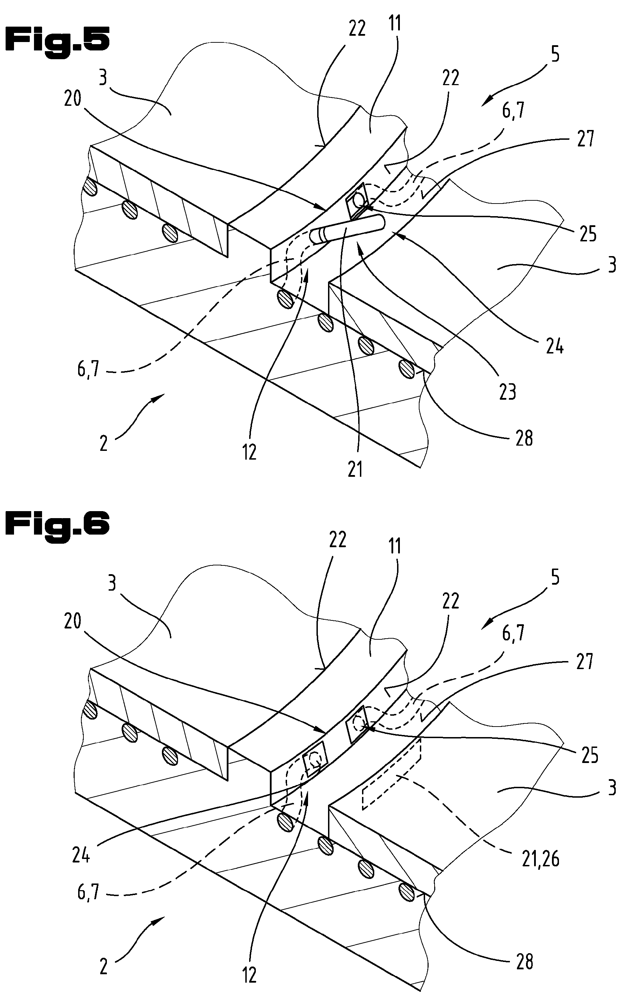

In der Fig. 5 ist eine weitere und gegebenenfalls für sich eigenständige Ausführungsform der Schweißanordnung 1 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

In Fig. 5 ist das Verbindungselement 2 in einer perspektivischen Detailansicht dargestellt. Hierbei ist insbesondere ein Detailausschnitt aus dem Nahbereich des Anschlages 11 ersichtlich.

Wie aus Fig. 5 ersichtlich, kann vorgesehen sein, dass das Heizelement 6, insbesondere der Widerstandsheizdraht 7, eine Unterbrechung 20 aufweist. Weiters kann ein Überbrückungselement 21 vorgesehen sein, welches zur Überbrückung der Unterbrechung 20 und somit zum Schließen einer elektrisch leitenden Verbindung im Heizelement 6 dient. Insbesondere kann vorgesehen sein, dass das Überbrückungselement 21 an einer Stirnseite 22 des Anschlages 11 angeordnet ist. Natürlich kann vorgesehen sein, dass an beiden Stirnseiten 22 des Anschlages 11 jeweils eine derartige Unterbrechung 20 bzw. ein Überbrückungselement 21 ausgebildet sind, sodass das korrekte Fügen beider Leitungselemente 3 erfasst werden kann.

Wie aus Fig. 5 ersichtlich, kann vorgesehen sein, dass das Überbrückungselement 21 in Form eines Federelementes 23 ausgebildet ist, welches an dessen Längsende einen ersten Kontakt 24 bildet. Direkt in der Stirnseite 22 des Anschlages 11 kann ein zweiter Kontakt 25 ausgebildet sein. Der zweite Kontakt 25 ist vorzugsweise so ausgebildet, dass er gegenüber der Stirnseite 22 des Anschlages 11 geringfügig vorsteht. Im unverbauten Zustand kann das Federelement 23, wie in Fig. 4 dargestellt, derart im Anschlag 11 positioniert sein, dass der erste Kontakt 24 des Federelementes 23 und der zweite Kontakt 25 zueinander beabstandet sind. Wenn nun das Leitungselement 3 in das Verbindungselement 2 eingesteckt wird, drückt eine Stirnseite des Leitungselementes 3 gegen das Federelement 23, wodurch der erste Kontakt 24 an den zweiten Kontakt 25 angedrückt wird. Dadurch kann die Unterbrechung 20 elektrisch leitend überbrückt werden und der Schweißvorgang kann gestartet werden.

Natürlich ist es denkbar, dass das Federelement 23 durch ein gesondertes Element gebildet ist, welches elektrisch leitend mit dem Widerstandsheizdraht 7 gekoppelt ist. Alternativ dazu ist es natürlich auch denkbar, dass das Federelement 23 direkt durch den Widerstandsheizdraht 7 ausgebildet wird.

In der Fig. 6 ist eine weitere und gegebenenfalls für sich eigenständige Ausführungsform der Schweißanordnung 1 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass an der Stirnseite 22 des Anschlages 11 der Widerstandsheizdraht 7 die Unterbrechung 20 ausgebildet ist. Hierbei kann der erste Kontakt 24 an einer Seite der Unterbrechung 20 des Widerstandsheizdrahtes 7 ausgebildet sein und der zweite Kontakt 25 an einer zweiten Seite der Unterbrechung 20 des Widerstandsheizdrahtes 7 ausgebildet sein.

In diesem Ausführungsbeispiel dient ein Materialstreifen 26 aus einem elektrisch leitfähigen Material als Überbrückungselement 21. Der Materialstreifen 26 wird an einer Stirnseite des Leitungselementes 3 appliziert und stellt im korrekt verbundenen Zustand des Verbindungselementes 2 mit den Leitungselementen 3 eine elektrisch leitfähige Verbindung im unterbrochenen Widerstandsheizdraht 7 her. Der Materialstreifen 26 kann sich beispielsweise über ein stirnseitiges Umfangssegment des Leitungselementes 3 erstrecken. Alternativ dazu ist es auch denkbar, dass sich der Materialstreifen 26 stirnseitig über den ganzen Umfang des Leitungselementes 3 erstreckt.

In einer alternativen, nicht dargestellten Ausführungsvariante kann auch vorgesehen sein, dass mutatis mutandis zum Ausführungsbeispiel nach Fig. 5 der Widerstandsheizdraht 7 unterbrochen ist, wobei der erste Kontakt 24 und der zweite Kontakt 25 ausgebildet sind. Hierbei kann jedoch vorgesehen sein, dass die beiden Kontakte 24, 25 an einer Innenmantelfläche 27 des Schweißbereiches 5 angeordnet ist. Damit korrespondierend kann vorgesehen sein, dass der Materialstreifen 26 an einer Außenmantelfläche 28 des Leitungselementes 3 angeordnet ist. In diesem nicht dargestellten Ausführungsbeispiel wird die Verbindung der Unterbrechung 20 ebenfalls durch den Materialstreifen 26 geschlossen, wenn das Verbindungselement 2 und das Leitungselement 3 korrekt miteinander gefügt sind.

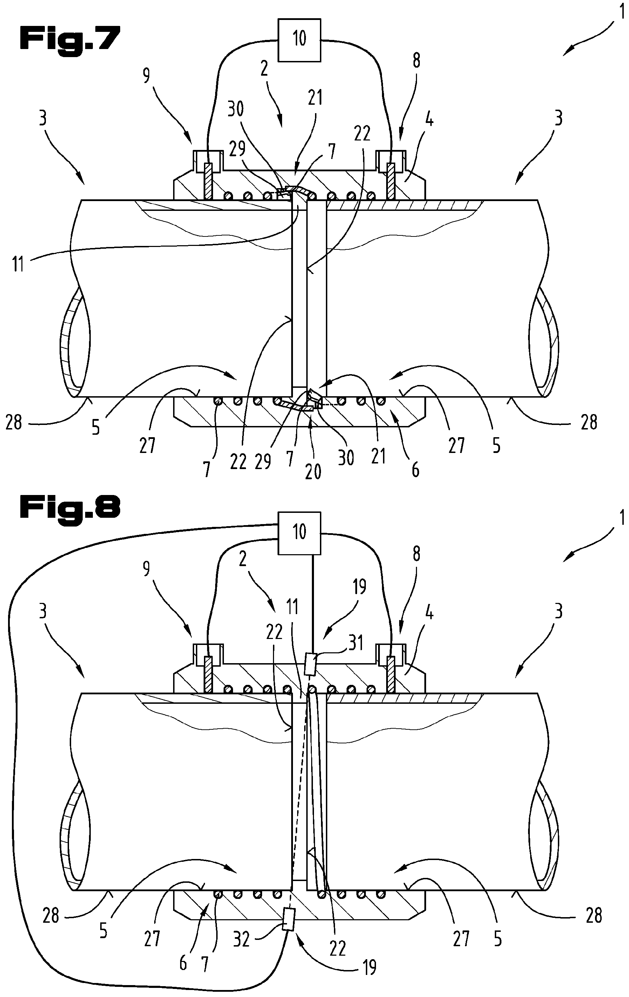

In der Fig. 7 ist eine weitere und gegebenenfalls für sich eigenständige Ausführungsform der Schweißanordnung 1 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass die Unterbrechung 20 im Bereich der Innenmantelfläche 27 des Körpers 4 ausgebildet ist. Hierbei kann vorgesehen sein, dass das Überbrückungselement 21 einen Aufbau ähnlich zu einem Kontaktschalter aufweist. Insbesondere kann vorgesehen sein, dass ein Kontaktelement 29 ausgebildet ist, welches zur Anlage an einer Außenmantelfläche 28 des Leitungselementes 3 dient. Mit dem Kontaktelement 29 kann ein Teil des Widerstandsheizdrahtes 7 gekoppelt sein, welcher zum Herstellen einer elektrisch leitenden Überbrückung der Unterbrechung 20 dient. Weiters kann ein Federelement 30 ausgebildet sein, welches zum Öffnen des Kontaktes an der Unterbrechung 20 dient, sobald die korrekte Positionierung des Verbindungselementes 2 und der Leitungselemente 3 gestört wird.

In der Fig. 8 ist eine weitere und gegebenenfalls für sich eigenständige Ausführungsform der Schweißanordnung 1 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich, kann vorgesehen sein, dass der Ultraschallsensor 19 der Fügekontrolle 12 einen Sender 31 und einen Empfänger 32 umfasst, welche diagonal gegenüberliegend am Verbindungselement 2 angeordnet sind und gleichzeitig axial zueinander versetzt sind. Der Sender 31 und der Empfänger 32 können hierbei so zueinander ausgerichtet sein, dass beide Leitungselemente 3 innerhalb des Erfassungsbereiches dieses Ultraschallsensors 19 liegen. Somit kann mit nur einem Sender 31 und einem Empfänger 32 die korrekte Lage beider Leitungselemente 3 ermittelt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Schweißanordnung | 29 | Kontaktelement |
| 2 | Verbindungselement | 30 | Federelement |
| 3 | Leitungselement | 31 | Sender |
| 4 | Körper | 32 | Empfänger |
| 5 | Schweißbereich | | |
| 6 | Heizelement | | |
| 7 | Widerstandsheizdraht | | |
| 8 | erster Anschlusspunkt | | |
| 9 | zweiter Anschlusspunkt | | |
| 10 | Schweißgerät | | |
| 11 | Anschlag | | |
| 12 | Fügekontrolle | | |
| 13 | Sensor | | |
| 14 | Sensorgegenelement | | |
| 15 | Formelement | | |
| 16 | Fügevorrichtung | | |
| 17 | Klemmelement Leitungselement | | |
| 18 | Klemmelement Verbindungselement | | |
| 19 | Ultraschallsensor | | |
| 20 | Unterbrechung | | |
| 21 | Überbrückungselement | | |
| 22 | Stirnseite Anschlag | | |
| 23 | Federelement | | |
| 24 | erster Kontakt | | |
| 25 | zweiter Kontakt | | |
| 26 | Materialstreifen | | |
| 27 | Innenmantelfläche | | |
| 28 | Außenmantelfläche Leitungselement | | |

## Patentansprüche

1. Schweißbares Verbindungselement (2) zum Verbinden oder Anschließen thermoplastischer Leitungselemente (3), umfassend:
- einen thermoplastischen Körper (4);
- zumindest ein Heizelement (6), welches im Körper (4) eingebettet ist, wobei das Heizelement (6) in einem Schweißbereich (5) zur Erzeugung von Wärme zur Verschweißung des Körpers (4) mit dem zumindest einen Leitungselement (3) dient,
wobei eine Fügekontrolle (12) vorgesehen ist, welche dazu ausgebildet ist, den Start des Schweißvorganges zu unterbinden und/oder den Schweißvorgang zu unterbrechen, wenn der Körper (4) nicht korrekt mit dem Leitungselement (3) gefügt ist, wobei das Heizelement (6) in Form eines Widerstandsheizdrahtes (7) ausgebildet ist, wobei die Fügekontrolle (12) eine Unterbrechung (20) im Widerstandsheizdraht (7) und ein Überbrückungselement (21) zum Schließen der Unterbrechung (20) umfasst, wobei das Überbrückungselement (21) derart im Körper (4) angeordnet ist, dass die Unterbrechung (20) geschlossen ist, wenn das Leitungselement (3) korrekt mit dem Verbindungselement (2) gefügt ist, **dadurch gekennzeichnet, dass** das Überbrückungselement (21) durch einen leitfähigen Materialstreifen (26) gebildet ist, welcher auf dem Leitungselement (3) applizierbar ist, insbesondere dass im Körper (4) ein Anschlag (11) ausgebildet ist, welcher als Einsteckbegrenzung für das Leitungselement (3) dient und einen ersten Kontakt (24) und in Umfangsrichtung versetzt einen zweiten Kontakt (25) aufweist und der Materialstreifen (26) stirnseitig am Leitungselement (3) applizierbar ist und zum elektrischen Verbinden des ersten Kontaktes (24) mit dem zweiten Kontakt (25) dient.

2. Verbindungselement (2) nach Anspruch 1, **dadurch gekennzeichnet, dass** am Körper (4) zumindest ein Formelement (15), insbesondere eine Ausnehmung, ausgebildet ist, welche zur Aufnahme eines Sensors (13, 19) der Fügekontrolle (12) dient.

3. Verbindungselement (2) nach Anspruch 1, **dadurch gekennzeichnet, dass** am Körper (4) axial zueinander beabstandet zumindest zwei Formelemente (15), insbesondere Ausnehmungen, ausgebildet sind, welche jeweils zur Aufnahme eines Sensors (13, 19) der Fügekontrolle (12) dienen.

4. Schweißanordnung (1) umfassend:
- zumindest ein thermoplastisches Leitungselement (3);
- ein Verbindungselement (2), welches einen thermoplastischen Körper (4) aufweist, wobei ein Heizelement (6) im Körper (4) eingebettet ist, welches in einem Schweißbereich (5) zur Erzeugung von Wärme zur Verschweißung des Körpers (4) mit dem zumindest einen Leitungselement (3) dient;
- ein Schweißgerät (10) zum Verschweißen des Verbindungselementes (2) mit dem zumindest einen thermoplastischen Leitungselement (3);
wobei eine Fügekontrolle (12) vorgesehen ist, welche dazu ausgebildet ist, den Start des Schweißvorganges zu unterbinden und/oder den Schweißvorgang zu unterbrechen, wenn der Körper (4) nicht korrekt mit dem Leitungselement (3) gefügt ist, **dadurch gekennzeichnet, dass**
die Fügekontrolle (12) einen Sensor (13, 19) umfasst, welcher mit dem Schweißgerät (10) gekoppelt ist, wobei das Schweißgerät (10) dazu ausgebildet ist, vor dem Start des Schweißvorganges und/oder während dem Schweißvorgang mittels des Sensors (13, 19) die korrekte Verbindung des Verbindungselementes (2) mit dem Leitungselement (3) abzufragen.

5. Schweißanordnung (1) nach Anspruch 4, **dadurch gekennzeichnet, dass** der Sensor (13) am Körper (4) des Verbindungselementes (2) angeordnet ist oder anordenbar ist, und dass die Fügekontrolle (12) ein Sensorgegenelement (14) umfasst, welches am Leitungselement (3) angeordnet ist oder anordenbar ist, wobei der Sensor (13) mit dem Schweißgerät (10) koppelbar ist und das Schweißgerät (10) dazu ausgebildet ist, den Schweißvorgang in Abhängigkeit einer korrekten Position des Sensorgegenelementes (14) relativ zum Sensor (13) zu starten bzw. durchzuführen.

6. Schweißanordnung (1) nach Anspruch 5, **dadurch gekennzeichnet, dass** eine Fügevorrichtung (16) ausgebildet ist, welche zum Positionieren des zumindest einen Leitungselementes (3) relativ zum Verbindungselement (2) dient und dass der Sensor (13) an der Fügevorrichtung (16) angeordnet ist oder anordenbar ist, und dass die Fügekontrolle (12) ein Sensorgegenelement (14) umfasst, welches am Leitungselement (3) angeordnet ist oder anordenbar ist, wobei der Sensor (13) mit dem Schweißgerät (10) koppelbar ist und das Schweißgerät (10) dazu ausgebildet ist, den Schweißvorgang in Abhängigkeit einer korrekten Positionierung des Sensorgegenelementes (14) relativ zum Sensor (13) zu starten bzw. durchzuführen.

7. Schweißanordnung (1) nach Anspruch 5 oder 6, **dadurch gekennzeichnet, dass** der Sensor (13) in Form eines RFID-Moduls ausgebildet ist und dass das Sensorgegenelement (14) in Form eines RFID-Tags ausgebildet ist.

8. Schweißanordnung (1) nach Anspruch 5 oder 6, **dadurch gekennzeichnet, dass** der Sensor (13) in Form eines Hallsensors ausgebildet ist und dass das Sensorgegenelement (14) in Form eines Magnetelements ausgebildet ist.

9. Schweißanordnung (1) nach Anspruch 5 oder 6, **dadurch gekennzeichnet, dass** der Sensor (13) in Form eines optischen Sensors ausgebildet ist und dass das Sensorgegenelement (14) in Form eines Reflektors ausgebildet ist.

10. Schweißanordnung (1) nach Anspruch 4, **dadurch gekennzeichnet, dass** die Fügekontrolle (12) einen Ultraschallsensor (19) umfasst, insbesondere dass der Ultraschallsensor (19) mit dem Schweißgerät (10) gekoppelt ist.

11. Schweißanordnung (1) nach einem der Ansprüche 4 bis 10, **dadurch gekennzeichnet, dass** am Körper (4) zumindest ein Formelement (15), insbesondere eine Ausnehmung, ausgebildet ist, welche zur Aufnahme des Sensors (13, 19) dient.

12. Schweißanordnung (1) nach einem der Ansprüche 4 bis 11, **dadurch gekennzeichnet, dass** am Körper (4) axial zueinander beabstandet zumindest zwei Formelemente (15), insbesondere Ausnehmungen, ausgebildet sind, welche jeweils zur Aufnahme des Sensors (13, 19) dienen.

13. Verfahren zum Verbinden oder Anschließen thermoplastischer Leitungselemente (3) mit einem Verbindungselement (2) umfassend die Verfahrensschritte:
- bereitstellen des zumindest einen thermoplastischen Leitungselementes (3);
- bereitstellen des Verbindungselementes (2), welches einen thermoplastischen Körper (4) aufweist, wobei ein Heizelement (6) im Körper (4) eingebettet ist, welches in einem Schweißbereich (5) zur Erzeugung von Wärme zur Verschweißung des Körpers (4) mit dem zumindest einen Leitungselement (3) dient;
- fügen des Verbindungselementes (2) mit dem zumindest einen thermoplastischen Leitungselement (3);
- bereitstellen eines Schweißgerätes (10) zum Verschweißen des Verbindungselementes (2) mit dem zumindest einen thermoplastischen Leitungselement (3);
- verschweißen des Verbindungselementes (2) mit dem zumindest einen thermoplastischen Leitungselement (3) durch Erzeugung von Wärme im Schweißbereich (5) mittels des Schweißgerätes (10),
wobei der Schweißvorgang nur dann gestartet oder fortgesetzt wird, wenn mittels einer Fügekontrolle (12) eine korrekte Verbindung zwischen dem Körper (4) und dem zumindest einen thermoplastischen Leitungselement (3) festgestellt wird,
**dadurch gekennzeichnet, dass** die Fügekontrolle (12) einen Sensor (13, 19) umfasst, welcher mit dem Schweißgerät (10) gekoppelt ist, wobei vor dem Start des Schweißvorganges und/oder während dem Schweißvorgang vom Schweißgerät (10) mittels des Sensors (13, 19) die korrekte Verbindung des Verbindungselementes (2) mit dem Leitungselement (3) abgefragt wird.

## Claims

1. A weldable connecting element (2) for connecting or joining thermoplastic line elements (3), comprising:
- a thermoplastic body (4);
- at least one heating element (6), which is embedded in the body (4), wherein the heating element (6) serves to generate heat in a welding area (5) for welding the body (4) to the at least one line element (3),
wherein a joining control (12) is provided, which is configured to prohibit the start of the welding operation and/or to interrupt the welding operation if the body (4) is not correctly joined with the line element (3), wherein the heating element (6) is configured in the form of a resistance heating wire (7), wherein the joining control (12) comprises an interruption (20) in the resistance heating wire (7) and a bridging element (21) for closing the interruption (20), wherein the bridging element (21) is arranged in the body (4) such that the interruption (20) is closed when the line element (3) is correctly joined with the connecting element (2), **characterized in that** the bridging element (21) is formed by a conductive material strip (26), which can be applied on the line element (3), in particular that a stop (11) is formed in the body (4), which stop (11) serves as an insertion limit for the line element (3) and has a first contact (24) and a second contact (25) offset in the circumferential direction, and the material strip (26) can be applied on the front side of the line element (3) and serves to electrically connect the first contact (24) to the second contact (25).

2. The connecting element (2) according to claim 1, **characterized in that** at least one shaped element (15), in particular a recess, is formed on the body (4), which shaped element (15) serves to accommodate a sensor (13, 19) of the joining control (12).

3. The connecting element (2) according to claim 1, **characterized in that** at least two shaped elements (15), in particular recesses, which are axially spaced apart from one another, are formed on the body (4), each of which serves to accommodate a sensor (13, 19) of the joining control (12).

4. A welding assembly (1) comprising:
- at least one thermoplastic line element (3);
- a connecting element (2), which has a thermoplastic body (4), wherein a heating element (6) is embedded in the body (4), which serves to generate heat in a welding area (5) for welding the body (4) to the at least one line element (3);
- a welding device (10) for welding the connecting element (2) to the at least one thermoplastic line element (3);
wherein a joining control (12) is provided, which is configured to prohibit the start of the welding operation and/or to interrupt the welding operation if the body (4) is not correctly joined with the line element (3), **characterized in that** the joining control (12) comprises a sensor (13, 19), which is coupled to the welding device (10), wherein the welding device (10) is configured to retrieve the correct connection of the connecting element (2) and the line element (3) by means of the sensor (13, 19) before the start of the welding operation and/or during the welding operation.

5. The welding assembly (1) according to claim 4, **characterized in that** the sensor (13) is arranged or can be arranged on the body (4) of the connecting element (2), and that the joining control (12) comprises a sensor counter-element (14), which is arranged or can be arranged on the line element (3), wherein the sensor (13) can be coupled to the welding device (10), and the welding device (10) is configured to start and/or to carry out the welding operation dependent on a correct position of the sensor counter-element (14) relative to the sensor (13).

6. The welding assembly (1) according to claim 5, **characterized in that** a joining device (16) is formed, which serves to position the at least one line element (3) relative to the connecting element (2), and that the sensor (13) is arranged or can be arranged on the joining device (16), and that the joining control (12) comprises a sensor counter-element (14), which is arranged or can be arranged on the line element (3), wherein the sensor (13) can be coupled to the welding device (10), and the welding device (10) is configured to start and/or to carry out the welding operation dependent on a correct positioning of the sensor counter-element (14) relative to the sensor (13).

7. The welding assembly (1) according to claim 5 or 6, **characterized in that** the sensor (13) is configured in the form of an RFID module, and that the sensor counter-element (14) is configured in the form of an RFID tag.

8. The welding assembly (1) according to claim 5 or 6, **characterized in that** the sensor (13) is configured in the form of a Hall sensor, and that the sensor counter-element (14) is configured in the form of a magnet element.

9. The welding assembly (1) according to claim 5 or 6, **characterized in that** the sensor (13) is configured in the form of an optical sensor, and that the sensor counter-element (14) is configured in the form of a reflector.

10. The welding assembly (1) according to claim 4, **characterized in that** the joining control (12) comprises an ultrasonic sensor (19), in particular that the ultrasonic sensor (19) is coupled to the welding device (10).

11. The welding assembly (1) according to one of claims 4 to 10, **characterized in that** at least one shaped element (15), in particular a recess, is formed on the body (4), which shaped element (15) serves to accommodate the sensor (13, 19).

12. The welding assembly (1) according to one of claims 4 to 11, **characterized in that** at least two shaped elements (15), in particular recesses, which are axially spaced apart from one another, are formed on the body (4), each of which serves to accommodate the sensor (13, 19).

13. A method for connecting or joining thermoplastic line elements (3) with a connecting element (2), comprising the method steps:
- providing the at least one thermoplastic line element (3);
- providing the connecting element (2), which comprises a thermoplastic body (4), wherein a heating element (6) is embedded in the body (4), which heating element (6) serves to generate heat in a welding area (5) for welding the body (4) to the at least one line element (3);
- joining the connecting element (2) with the at least one thermoplastic line element (3);
- providing a welding device (10) for welding the connecting element (2) to the at least one thermoplastic line element (3);
- welding the connecting element (2) to the at least one thermoplastic line element (3) by generating heat in the welding area (5) by means of the welding device (10), wherein the welding operation is started or resumed only if a correct connection between the body (4) and the at least one thermoplastic line element (3) is determined by means of a joining control (12),
**characterized in that** the joining control (12) comprises a sensor (13, 19), which is coupled to the welding device (10), wherein the correct connection of the connecting element (2) and the line element (3) is retrieved by the welding device (10) by means of the sensor (13, 19) before the start of the welding operation and/or during the welding operation.

## Revendications

1. Élément de liaison soudable (2) permettant de relier ou de raccorder des éléments de conduite thermoplastiques (3), comprenant :
- un corps thermoplastique (4) ;
- au moins un élément chauffant (6) qui est incorporé dans le corps (4), dans lequel l'élément chauffant (6) est utilisé dans une région de soudage (5) afin de produire de la chaleur permettant de souder le corps (4) au au moins un élément de conduite (3), dans lequel un dispositif de contrôle d'assemblage (12) est prévu, qui est conçu pour empêcher le démarrage de l'opération de soudage et/ou pour interrompre l'opération de soudage lorsque le corps (4) n'est pas réuni correctement à l'élément de conduite (3), dans lequel l'élément de chauffage (6) est réalisé sous la forme d'un fil de chauffage résistif (7), dans lequel le dispositif de contrôle d'assemblage (12) comprend une interruption (20) dans le fil de chauffage résistif (7) et un élément de pontage (21) permettant de fermer ladite interruption (20), dans lequel l'élément de pontage (21) est agencé dans le corps (4) de telle manière que l'interruption (20) est fermée lorsque l'élément de conduite (3) est réuni correctement à l'élément de liaison (2), **caractérisé en ce que** l'élément de pontage (21) est formé par une bande de matériau conducteur (26) qui peut être appliquée sur l'élément de conduite (3), en particulier **en ce qu'**une butée (11) est réalisée dans le corps (4), laquelle butée sert de limite d'enfichage pour l'élément de conduite (3) et présente un premier contact (24) et un second contact (25) décalé dans le sens circonférentiel, et la bande de matériau peut être appliquée sur le côté frontal de l'élément de conduite (26) et permet une connexion électrique du premier contact (24) avec le second contact (25).

2. Élément de liaison (2) selon la revendication 1, **caractérisé en ce qu'**au moins un élément de forme (15), en particulier un évidement, est réalisé au niveau du corps (4), lequel élément de forme sert à accueillir un capteur (13, 19) du dispositif de contrôle d'assemblage (12).

3. Élément de liaison (2) selon la revendication 1, **caractérisé en ce qu'**au moins deux éléments de forme (15), en particulier des évidements, espacés axialement l'un de l'autre, sont formés au niveau du corps (4), lesquels éléments de forme servent respectivement à accueillir un capteur (13, 19) du dispositif de contrôle d'assemblage (12).

4. Dispositif de soudage (1) comprenant :
- au moins un élément de conduite thermoplastique (3) ;
- un élément de liaison (2) qui présente un corps thermoplastique (4), dans lequel un élément chauffant (6) est incorporé dans le corps (4), lequel élément chauffant est utilisé dans une région de soudage (5) afin de produire de la chaleur permettant de souder le corps (4) au au moins un élément de conduite (3) ;
- un appareil de soudage (10) permettant de souder l'élément de liaison (2) au au moins un élément de conduite thermoplastique (3) ;
dans lequel un dispositif de contrôle d'assemblage (12) est fourni, qui est conçu pour empêcher le démarrage de l'opération de soudage et/ou pour interrompre l'opération de soudage si le corps (4) n'est pas correctement réuni à l'élément de conduite (3), **caractérisé en ce que**
le dispositif de contrôle d'assemblage (12) comprend un capteur (13, 19) qui est couplé à l'appareil de soudage (10), dans lequel l'appareil de soudage (10) est conçu pour vérifier, à l'aide du capteur (13, 19), la conformité de liaison de l'élément de liaison (2) avec l'élément de conduite (3) avant le début de l'opération de soudage et/ou pendant l'opération de soudage.

5. Dispositif de soudage (1) selon la revendication 4, **caractérisé en ce que** le capteur (13) est agencé ou peut être agencé au niveau du corps (4) de l'élément de liaison (2), et **en ce que** le dispositif de contrôle d'assemblage (12) comprend un contre-élément de capteur (14) qui est agencé ou peut être agencé au niveau de l'élément de conduite (3), dans lequel le capteur (13) peut être couplé à l'appareil de soudage (10) et l'appareil de soudage (10) est conçu pour démarrer ou mettre en œuvre l'opération de soudage en fonction d'un conformité de position du contre-élément de capteur (14) par rapport au capteur (13).

6. Dispositif de soudage (1) selon la revendication 5, **caractérisé en ce qu'**un dispositif d'assemblage (16) est réalisé, qui sert à positionner le au moins un élément de conduite (3) par rapport à l'élément de liaison (2) et **en ce que** le capteur (13) est agencé ou peut être agencé au niveau du dispositif d'assemblage (16), et **en ce que** le dispositif de contrôle d'assemblage (12) comprend un contre-élément de capteur (14) qui est agencé ou peut être agencé au niveau de l'élément de conduite (3), dans lequel le capteur (13) peut être couplé à l'appareil de soudage (10) et l'appareil de soudage (10) est conçu pour démarrer ou mettre en œuvre l'opération de soudage en fonction d'une conformité de positionnement du contre-élément de capteur (14) par rapport au capteur (13).

7. Dispositif de soudage (1) selon la revendication 5 ou 6, **caractérisé en ce que** le capteur (13) est réalisé sous la forme d'un module RFID et **en ce que** le contre-élément de capteur (14) est réalisé sous la forme d'une étiquette RFID.

8. Dispositif de soudage (1) selon la revendication 5 ou 6, **caractérisé en ce que** le capteur (13) est réalisé sous la forme d'un capteur à effet Hall et **en ce que** le contre-élément de capteur (14) est réalisé sous la forme d'un élément magnétique.

9. Dispositif de soudage (1) selon la revendication 5 ou 6, **caractérisé en ce que** le capteur (13) est réalisé sous la forme d'un capteur optique et **en ce que** le contre-élément de capteur (14) est réalisé sous la forme d'un réflecteur.

10. Dispositif de soudage (1) selon la revendication 4, **caractérisé en ce que** le dispositif de contrôle d'assemblage (12) comprend un capteur à ultrasons (19), en particulier **en ce que** le capteur à ultrasons (19) est couplé à l'appareil de soudage (10).

11. Dispositif de soudage (1) selon l'une quelconque des revendications 4 à 10, **caractérisé en ce qu'**au moins un élément de forme (15), en particulier un évidement, servant à accueillir le capteur (13, 19) est réalisé au niveau du corps (4).

12. Dispositif de soudage (1) selon l'une quelconque des revendications 4 à 11, **caractérisé en ce qu'**au moins deux éléments de forme (15), en particulier des évidements, sont réalisés au niveau du corps (4) à une certaine distance l'un de l'autre dans le sens axial, et servent respectivement à accueillir le capteur (13, 19).

13. Procédé de liaison ou de raccordement d'éléments de conduite thermoplastiques (3) à un élément de liaison (2) comprenant les étapes de procédé ci-dessous consistant à :
- fournir le au moins un élément de conduite thermoplastique (3) ;
- fournir l'élément de liaison (2) qui présente un corps thermoplastique (4), dans lequel un élément chauffant (6) est incorporé dans le corps (4), lequel élément chauffant est utilisé dans une région de soudage (5) afin de produire de la chaleur permettant de souder le corps (4) au au moins un élément de conduite (3) ;
- réunir l'élément de liaison (2) au au moins un élément de conduite thermoplastique (3) ;
- fournir un appareil de soudage (10) permettant de souder l'élément de liaison (2) au au moins un élément de conduite thermoplastique (3) ;
- souder l'élément de liaison (2) au au moins un élément de conduite thermoplastique (3) en générant de la chaleur dans la région de soudage (5) au moyen de l'appareil de soudage (10),
dans lequel l'opération de soudage n'est démarrée ou poursuivie que si une liaison correcte entre le corps (4) et le au moins un élément de conduite thermoplastique (3) est constatée au moyen d'un dispositif de contrôle d'assemblage (12),
**caractérisé en ce que** le dispositif de contrôle d'assemblage (12) comprend un capteur (13, 19) qui est couplé à l'appareil de soudage (10), dans lequel la conformité de liaison de l'élément de liaison (2) avec l'élément de conduite (3) est vérifiée par l'appareil de soudage (10) au moyen du capteur (13, 19) avant le début de l'opération de soudage et/ou pendant l'opération de soudage.
